(19) Europäisches Patentamt
European Patent Office
Office européen des brevets

(11) Veröffentlichungsnummer: **0 245 790 B1**

(12) **EUROPÄISCHE PATENTSCHRIFT**

(45) Veröffentlichungstag der Patentschrift: **26.09.90**

(51) Int. Cl.⁵: **B 29 B 7/60,** B 01 F 15/04

(21) Anmeldenummer: **87106676.7**

(22) Anmeldetag: **08.05.87**

(54) **Vorrichtung zum Dosieren von Reaktionsgemischen.**

(30) Priorität: **15.05.86 DE 3616463**

(43) Veröffentlichungstag der Anmeldung: **19.11.87 Patentblatt 87/47**

(45) Bekanntmachung des Hinweises auf die Patenterteilung: **26.09.90 Patentblatt 90/39**

(84) Benannte Vertragsstaaten: **CH DE FR GB IT LI SE**

(56) Entgegenhaltungen: **DE-A-3 329 296**

(73) Patentinhaber: **Battenfeld GmbH**
**Scherl 10**
**D-5882 Meinerzhagen (DE)**

(72) Erfinder: **Feist, Norbert**
**In der Delle 3**
**D-5912 Hilchenbach (DE)**

(74) Vertreter: **Müller, Gerd et al**
**Patentanwälte HEMMERICH-MÜLLER-GROSSE-POLLMEIER-MEY Hammerstrasse 2**
**D-5900 Siegen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 245 790 B1

## Beschreibung

Die Erfindung betrifft eine Vorrichtung zum Dosieren von Reaktionsgemischen, insbesondere für die Erzeugung von Polyurethan-Hartschaum, bei welcher für die Zudosierung jeder Reaktionskomponente - Polyol und Isocyanat - in einen Mischkopf zwei Dosierzylinder vorgesehen sind, wobei deren Dosierkolben unabhängig voneinander durch je einen eigenen, doppelt wirkenden Hydraulikzylinder jeweils in gegenseitigem Wechsel für die Füllung mit der Reaktionskomponente und den anschließenden Ausstoß der eingefüllten Reaktionskomponente betreibbar sind.

Die DE-A-33 29 296 offenbart eine gattungsgemäße Vorrichtung zum Dosieren von viskosen Stoffen, insbesondere Zweikomponenten-Kunststoffen. Hierbei werden jeweils die beiden Dosierkolben der Dosierzylinder für die Reaktionskomponente A und die für die Reaktionskomponente B durch eine gemeinsame Hydraulikpumpe über doppelt wirkende Hydraulikzylinder angetrieben. In den Verbindungsleitungen zwischen den Hydraulikzylindern und der Hydraulikpumpe sind Mehrwegeventile angeordnet, die den doppelt wirkenden Hydraulikzylindern zur Antriebssteuerung vorgeschaltet sind. Auf der Ausstoßseite der Dosierzylinder sind Druckerhöhungseinheiten vorgesehen, um die Drücke in den zusammenarbeitenden Dosierzylindern während der sich überlappenden Ausstoßvorgänge aneinander angleichen zu können. Jede der beiden Druckerhöhungseinheiten umfaßt dabei neben einem Druckerhöhungszylinder noch eine Mehrzahl an zusätzlichen Absperrventilen, die in bestimmter Weise automatisch geschaltet werden müssen. Bei dieser Vorrichtung erweist es sich als nachteilig, daß es notwendig ist, Druckregel- bzw. Ausgleichsvorgänge unmittelbar zwischen den beiden zusammenarbeitenden Dosierzylindern herbeizuführen.

Der Erfindung liegt die Aufgabe zugrunde, eine gattungsgemäße Vorrichtung zum Dosieren von Reaktionsgemischen zu schaffen, durch die eine sehr exakte Arbeitsweise der Dosiervorrichtung gewährleistet ist und bei der der Anlagenaufwand möglichst gering ist.

Gelöst wird diese Aufgabe erfindungsgemäß nach dem Kennzeichen des Anspruchs 1 dadurch, daß die die Dosierkolben der zur Förderung der einen Reaktionskomponente vorgesehenen beiden Dosierzylinder betätigenden beiden Hydraulikzylinder unabhängig voneinander durch eine erste gemeinsame Hydraulikpumpe und die die Dosierkolben der zur Förderung der anderen Reaktionskomponente vorgesehenen beiden Dosierzylinder betätigenden beiden Hydraulikzylinder ebenfalls unabhängig voneinander durch eine zweite gemeinsame Hydraulikpumpe antreibbar sind, daß in jeder von zwei Verbindungsleitungen zwischen den Hydraulikzylindern und der jeweils zugehörigen Hydraulikpumpe ein servobetätigbares Proportionalventil angeordnet ist, daß dabei die Steuerzyklen der den Ausstoßvorgang beider zusammenarbeitender Dosierzylinder bestimmenden Proportionalventile zueinander zeitweilig überlappt eingestellt sind, daß ferner die Durchflußmenge der Hydraulikflüssigkeit zur Ausstoßseite der Kolben der Hydraulikzylinder durch die beiden Proportionalventile während der Überlappungszeit ihrer Steuerzyklen zueinander entgegengesetzt geregelt ist, und daß die beiden Proportionalventile gemeinsam auf gleichbleibende Gesamt-Durchflußmenge geregelt sind.

Dadurch wird erreicht, daß schon vor Beendigung des Ausstoßhubes des Dosierkolbens in einen Dosierzylinder der Ausstoßhub dieses Dosierkolbens im anderen Dosierzylinder anläuft und folglich während eines gewissen Zeitraums des Ausstoßzyklus ein und dieselbe Komponente gleichzeitig aus beiden zusammenarbeitenden Dosierzylindern in den Mischkopf gefördert wird. Außerdem ergibt sich, daß im gleichen Maße, wie die Ausstoßmenge der Komponente aus dem auslaufenden Dosierzylinder abnimmt, zugleich die Ausstoßmenge der Komponente aus dem anlaufenden Dosierzylinder ansteigt und somit in Richtung zum Mischkopf hin ständig eine konstante Menge der Komponente gefördert wird. Vorteilhaft ist, daß über die servobetätigbaren Proportionalventile die Beeinflussung der Steuerzyklen für die Ausstoßvorgänge unmittelbar antriebsseitig erreicht wird.

Nach Anspruch 2 ist des weiteren vorgesehen, daß nach der Erfindung die Steuerzyklen für die die Füllung der beiden Dosierzylinder bestimmenden Proportionalventile zeitlich gegeneinander versetzt eingestellt sind und dabei die zeitweilige Überlappung der Steuerzyklen für den Ausstoß der beiden Dosierzylinder in diese Versetztzeit gelegt ist.

Nach Anspruch 3 ist es aber ferner wichtig, daß die zeitweilige Überlappung der Steuerzyklen für den Ausstoßvorgang beider Dosierzylinder kürzer als die Versetztzeit zwischen den Füllvorgängen für diese Dosierzylinder eingestellt ist.

Als empfehlenswert hat es sich erwiesen, wenn die zeitweilige Überlappung der Steuerzyklen für den Ausstoß beider Dosierzylinder etwa einem Drittel der Versetztzeit zwischen den Füllvorgängen für beide Dosierzylinder entspricht.

Schließlich wird nach der Erfindung aber auch noch vorgeschlagen, daß gemäß Anspruch 5 die zeitweilige Überlappung der Steuerzyklen für den Ausstoßvorgang beider Dosierzylinder dem Endabschnitt der Versetztzeit zwischen den Füllvorgängen beider Dosierzylinder überlagert ist.

Weitere Merkmale und Vorteile des Gegenstandes der Erfindung werden nachfolgend anhand einer Zeichnung erläutert. Dabei zeigen

Figur 1 das Fließschema einer Vorrichtung zum Dosieren von Reaktionsgemischen,

Figur 2 in größerem Maßstab und schematisch vereinfachter Darstellung einen Längsschnitt durch einen Dosierzylinder mit angebautem, doppelt wirkendem Hydraulikzylinder als Antriebsteil und

Figur 3 ein Arbeitsdiagramm für ein zur kontinuierlichen Förderung einer Reaktionskomponente zusammenarbeitenden Dosierzylinder-Paares.

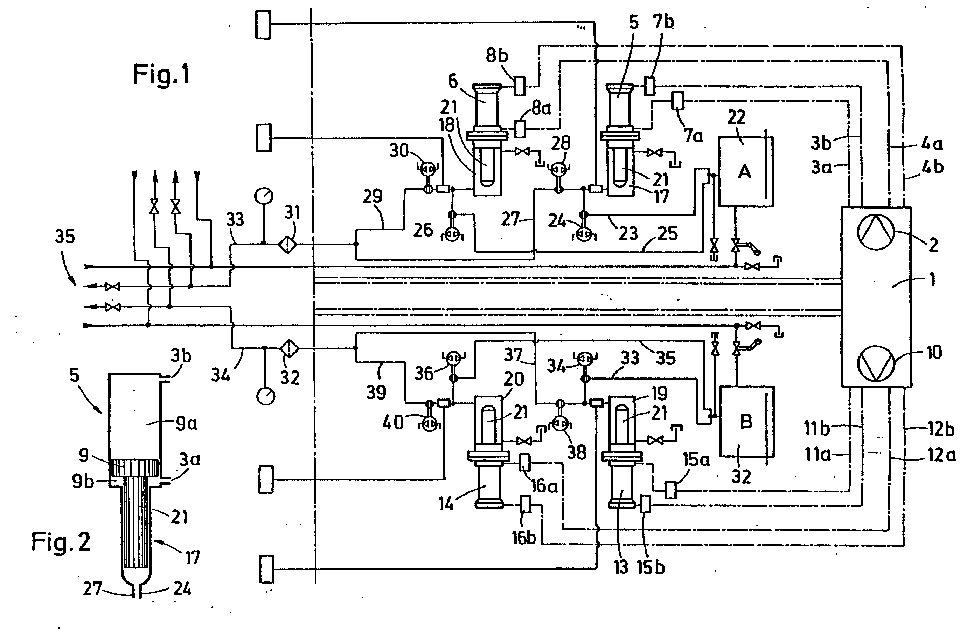

Das Fließschema einer Vorrichtung zum Dosieren von Reaktionsgemischen nach Fig. 1 zeigt einen Flüssigkeitstank 1, aus dem über eine Pumpe 2 Druckflüssigkeit in vier verschiedene Leitungen 3a, 3b und 4a, 4b gefördert werden kann. Die beiden Leitungen 3a und 3b führen dabei zu einem doppelt wirkenden Hydraulikzylinder 5, während die beiden Leitungen 4a und 4b an einen doppelt wirkenden Hydraulikzylinder 6 angeschlossen sind.

In den Leitungen 3a und 3b zum Hydraulikzylinder 5 sitzt je ein proportionalventil 7a bzw. 7b, während in den Leitungen 4a und 4b zum Hydraulikzylinder 6 je ein Proportionalventil 8a bzw. 8b angeordnet ist.

Über eine weitere Pumpe 10 wird aus dem Flüssigkeitstank 1 Druckflüssigkeit in vier Leitungen 11a, 11b und 12a, 12b gefördert, wobei die Leitungen 11a und 11b zu einem doppelt wirkenden Hydraulikzylinder 13 gehen und die Leitungen 12a und 12b zu einem doppelt wirkenden Hydraulikzylinder 14 geführt sind. In den Leitungen 11a und 11b sitzt wiederum je ein Proportionalventil 15a und 15b, während in den Leitungen 12a und 12b entsprechende Proportionalventile 16a und 16b angeordnet sind.

Der Hydraulikzylinder 5 arbeitet mit einem Dosierzylinder 17 zusammen, während dem Hydraulikzylinder 6 in entsprechender Weise ein Dosierzylinder 18 zugeordnet ist.

Der Hydraulikzylinder 13 betätigt einen Dosierzylinder 19 und in entsprechender Weise wird vom Hydraulikzylinder 14 auch ein Dosierzylinder 20 verstellt.

Wie in Fig. 2 anhand des doppelt wirkenden Hydraulikzylinders 5 gezeigt wird, enthalten sämtliche Hydraulikzylinder 5, 6, 13 und 14 einen Kolben 9, der abwechselnd von beiden Seiten her, bspw. über die Leitungen 3a und 3b, beaufschlagt werden kann, so daß er sich in beiden möglichen Bewegungsrichtungen zwangsweise verschieben läßt. Mit dem Kolben 9 ist dabei fest ein Plunger- bzw. Tauchkolben 21 verbunden, welcher jeweils in den Dosierzylinder 17, 18, 19 oder 20 hineinragt. Je nach Bewegungsrichtung des Kolbens 9 im Hydraulikzylinder verschiebt sich auch der plunger- bzw. Tauchkolben 21 im zugehörigen Dosierzylinder, d.h., das Füllvolumen in jedem der Dosierzylinder 17, 18, 19 und 20 kann durch die Verschiebebewegung des Plunger- bzw. Tauchkolbens entweder vergrößert oder, verkleinert werden.

Die beiden Dosierzylinder 17 und 18 arbeiten mit einem Vorratsbehälter 22 für die Komponente A zusammen, die bspw. Polyol sein kann. Dabei ist der Dosierzylinder 17 über eine Leitung 23 und ein Ventil 24 wahlweise mit dem Behälter 22 für die Komponente A verbindbar oder hiervon trennbar. Über eine Leitung 25 und ein Ventil 26 kann auch der Dosierzylinder 18 mit dem Behälter 22 für die Komponente A verbunden oder hiervon getrennt werden.

Andererseits ist es jedoch auch möglich, den Dosierzylinder 17 auf eine Leitung 27 mit einem Ventil 28 arbeiten zu lassen, während der Dosierzylinder 18 mit einer Leitung 29 und einem Ventil 30 zusammenwirkt. Die beiden Leitungen 27 und 29 führen zu einem Spaltfilter 31.

Ein Vorratsbehälter 32 für die Komponente B, bspw. Isocyanat, kann über eine Leitung 33 und ein Ventil 34 mit dem Dosierzylinder 19 verbunden werden, während er sich über eine Leitung 35 und ein Ventil 36 mit dem Dosierzylinder 20 verbinden läßt. Der Dosierzylinder 19, kann wiederum an eine Leitung 37 mit einem Ventil 38 angeschlossen werden, während sich der Dosierzylinder 20 an eine Leitung 39 mit einem Ventil 40 anschließen läßt. Die beiden Leitungen 37 und 39 führen zu einem Spaltfilter 32 hin.

Die von den beiden Spaltfiltern 31 und 32 abgehenden Leitungen 33 und 34 sind jeweils als Vorlaufleitungen für die beiden Komponenten A und B zum Mischkopf 35 hin wirksam.

Es sei noch darauf hingewiesen, daß die in den Hydraulikleitungen 3a, 3b; 4a, 4b; 11a, 11b; 12a, 12b angeordneten Proportionalventile 7a, 7b; 8a, 8b; 15a, 15b; 16a, 16b jeweils als servogesteuerte Ventile ausgelegt sind, welche die Durchflußmenge der Druckflüssigkeit zu den beiden Zylinderräumen 9a und 9b des jeweiligen Hydraulikzylinders 5 und 6 bzw. 13 und 14 in ganz bestimmter Weise beeinflussen können.

Besonders wichtig ist dabei eine gegenseitig abgestimmte Arbeitsweise einerseits der Proportionalventile 7b und 8b, welche den Komponentenausstoß aus den Dosierzylindern 17 und 18 steuern, sowie andererseits auch der Proportionalventile 15b und 16b, welche auf den Komponentenausstoß aus den beiden Dosierzylindern 19 und 20 Einfluß nehmen.

Der Füllvorgang für die Komponenten in die Dosierzylinder 17 und 18 wird durch die Proportionalventile 7a und 8a bestimmt, während in entsprechender Weise der Füllvorgang für die Dosierzylinder 19 und 20 von den Proportionalventilen 15a und 16a abhängig ist.

Wenn für den Füllvorgang des Dosierzylinders 17 das Proportionalventil 7a des Hydraulikzylinders 5 geöffnet wird, öffnet zugleich auch das Ventil 24, so daß über die Leitung 23 eine Verbindung des Dosierzylinders 17 mit dem Vorratsbehälter 22 für die Komponente A hergestellt ist. Währenddessen ist jedoch das Ventil 28 in der Leitung 27 geschlossen, die vom Dosierzylinder 17 abgeht.

Wenn zum Befüllen des Dosierzylinders 18 das Proportionalventil 8a für den Hydraulikzylinder 6 geöffnet wird, öffnet auch das Ventil 26 in der Leitung 25, so daß hierüber eine Verbindung des Dosierzylinders 18 mit dem Vorratsbehälter 22 für die Komponente A hergestellt ist. Gleichzeitig ist das Ventil 30 in der vom Dosierzylinder 18 abgehenden Leitung 29 geschlossen.

Für den Füllvorgang des Dosierzylinders 19 wird das Proportionalventil 15a des Hydraulikzylinders 13 geöffnet. Gleichzeitig öffnet auch das Ventil 34 in der Leitung 33, welche den Dosierzylinder 19 mit dem Vorratsbehälter 32 für die Komponente B verbindet.

Zur Befüllung des Dosierzylinders 20 wird das Proportionalventil 16a für den Hydraulikzylinder 14 geöffnet. Zugleich wird aber auch durch Öffnen des Ventils 36 über die Leitung 35 eine Verbindung zwischen dem Dosierzylinder 20 und dem Vorratsbehälter 32 für die Komponente B geschaffen. Während des jeweiligen Füllvorgangs ist das Ventil 38 bzw. 40 in der vom Dosierzylinder 19 bzw. 20 abgehenden Leitung 37 bzw. 39 geschlossen.

Für die Beschreibung des Steuerungsablaufs der in Fig. 1 dargestellten Dosiervorrichtung sei angenommen, daß der Dosierzylinder 17 mit der Komponente A und der Dosierzylinder 19 mit der Komponente B gefüllt ist, während der Dosierzylinder 18 keine Füllung der Komponente A und der Dosierzylinder 20 keine Füllung der Komponente B enthält. Zu Beginn des Arbeitszyklus werden nun die Proportionalventile 7b und 15b zu den Hydraulikzylindern 5 und 13 geöffnet, so daß der Kolben 9 jeweils den Plunger- bzw. Tauchkolben 21 der Dosierzylinder 17 und 19 im Sinne des Ausstoßens der Komponenten A und B beeinflussen. Diese werden dann bei geöffneten Ventilen 28 und 38 durch die Leitungen 27 und 37 in die Spaltfilter 31 und 32 sowie von diesen aus über die Vorlaufleitungen 33 und 34 in den Mischkopf 35 gefördert. Währenddessen sind für die Hydraulikzylinder 6 und 14 die Proportionalventile 8a und 16a so geöffnet, daß deren Kolben 9 auf die Plunger- bzw. Tauchkolben 21 der Dosierzylinder 18 und 20 im Füllsinne einwirken, diese also zur Befüllung der Zylinderräume hochfahren. Dabei sind die Zylinderräume über die Ventile 26 und 36 sowie die Leitungen 25 und 35 an die Vorratsbehälter 22 und 32 für die Komponenten A und B angeschlossen.

Die Steuerung der Proportionalventile 8a und 16a erfolgt dabei in der Weise, daß der Füllvorgang für die Dosierzylinder 18 und 20 schneller abgeschlossen wird als der Vorgang des Ausstoßens der Komponenten A und B aus den Dosierzylindern 17 und 19.

Kurz bevor der Vorgang des Ausstoßens der Komponenten A und B aus den Dosierzylindern 17 und 19 beendet ist, wird an den Hydraulikzylindern 6 und 14 für die Dosierzylinder 18 und 20 eine Umsteuerung der Proportionalventile so vorgenommen, daß nunmehr Druckmittelzufuhr über die Proportionalventile 8b und 16b stattfindet, wodurch deren Kolben 9 die zugeordneten Plunger-bzw. Tauchkolben 21 der Dosierzylinder 18 und 20 im Ausstoßsinne beaufschlagen.

Hieraus resultiert, daß kurz vor Beendigung des Ausstoßens der Komponente A aus dem Dosierzylinder 17 auch schon der Ausstoßvorgang für die Komponente A aus dem Dosierzylinder 18 einsetzt. Gleichermaßen setzt auch kurz vor Beendigung des Ausstoßvorgangs der Komponente B aus dem Dosierzylinder 19 der Ausstoßvorgang für diese Komponente B aus dem Dosierzylinder 20 ein.

Sofort wenn der Vorgang des Ausstoßens der Komponenten A und B aus den Dosierzylindern 17 und 19 beendet ist, werden dort die proportionalventile 7b und 7a bzw. 15b und 15a so umgestellt, daß die Kolben 9 der Hydraulikzylinder 5 und 13 zurückfahren und über die Plunger- bzw. Tauchkolben 21 der Dosierzylinder 17 und 19 deren Neubefüllung mit den Komponenten A und B vollziehen, während gleichzeitig der Ausstoßvorgang der Komponenten A und B aus den Dosierzylindern 18 und 20 noch abläuft.

Es ergibt sich damit eine Arbeitsweise der Dosiervorrichtung, die sich dadurch auszeichnet, daß die Steuerzyklen der den Ausstoßvorgang für die beiden zusammenarbeitenden Dosierzylinder 17 und 18 bzw. 19 und 20 bestimmenden Proportionalventile 7b und 8b bzw. 15b und 16b zueinander zeitweilig überlappt eingestellt sind. Die Arbeitsweise dieser Proportionalventile 7b und 8b bzw. 15b und 16b ist dabei vorzugsweise solcherart, daß die Durchflußmenge der Hydraulikflüssigkeit durch die Leitungen 3a und 4a bzw. 11a und 12a zu den Kolben 9 der Hydraulikzylinder 5 und 6 bzw. 13 und 14 während der Überlappungszeit ihrer Steuerzyklen zueinander entgegengesetzt geregelt wird, d.h. also, daß die beiden Proportionalventile 7b und 8b bzw. 15b und 16b gemeinsam auf gleichbleibende Gesamt-Durchflußmenge an Druckflüssigkeit geregelt sind.

Es läßt sich hieraus ableiten, daß während des Überlappungszeitraums der Steuerzyklen auch der Gesamtausstoß der Komponente A aus den Dosierzylindern 17 und 18 bzw. der Komponente B aus den Dosierzylindern 19 und 20 mit der jeweiligen Ausstoßmenge übereinstimmt, die normalerweise aus nur einem dieser Dosierzylinder 17 und 18 bzw. 19 und 20 ausgestoßen wird.

Es sei auch noch darauf hingewiesen, daß die Steuerzyklen für die die Füllung der beiden zusammenarbeitenden Dosierzylinder 17 und 18 bzw 19 und 20 bestimmenden Proportionalventile 7a und 8a bzw. 15a und 16a zeitlich gegeneinander versetzt eingestellt sind und dabei die zeitweilige Überlappung der Steuerzyklen für den gemeinsamen Ausstoß der beiden Dosierzylinder 17, 18 bzw. 19, 20 in diese Versetztzeit gelegt ist. Dabei ist jedoch die zeitweilige Überlappung der Steuerzyklen für den Ausstoßvorgang beider Dosierzylinder 17 und 18 bzw. 19 und 20 in jedem Falle kürzer eingestellt, als die Versetztzeit zwischen den Füllvorgängen für diese Dosierzylinder 17 und 18 bzw. 19 und 20.

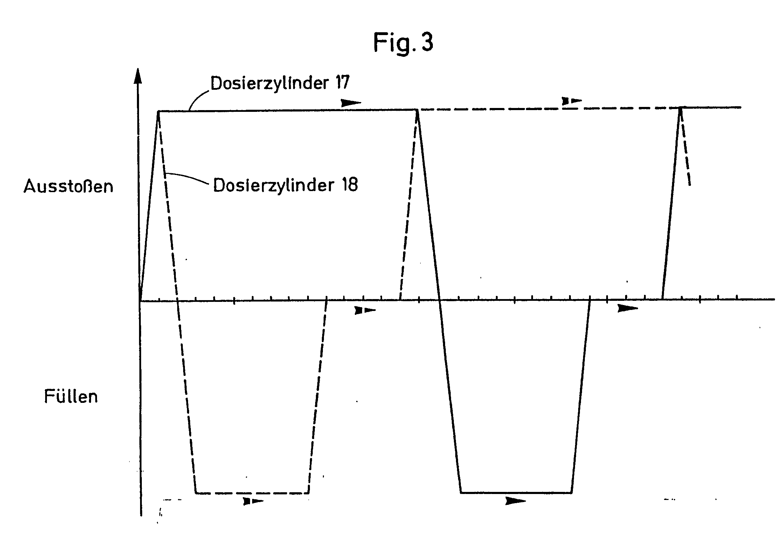

Aus dem Diagramm der Fig. 3 ist beispielhaft der Ablauf der Zusammenarbeit der beiden Dosierzylinder 17 und 18 dargestellt. Die oberhalb des waagerechten Zeitstrahls gelegenen Kurvenabschnitte deuten dabei jeweils die aus den beiden Dosierzylindern 17 und 18 ausgestoßenen Volumenströme an und lassen auch erkennen, wie und wo sich diese Volumenströme zeitlich überlappen.

Die unterhalb des waagerechten Zeitstrahls gelegenen Kurvenabschnitte deuten jeweils den Ablauf und die Lage der Füllvorgänge für die beiden Dosierzylinder 17 und 18 an. Dabei ist auch erkennbar, daß die zeitweilige Überlappung der Steuerzyklen für den Ausstoßvorgang beider Dosierzylinder 17 und 18 etwa einem Drittel der Versetztzeit zwischen den Füllvorgängen für die beiden Dosierzylinder 17 und 18 entspricht. Außerdem ist dort erkennbar, daß die zeitweilige Überlappung der Steuerzyklen für den Ausstoßvorgang beider Dosierzylinder 17 und 18 im Endabschnitt der Versetztzeit zwischen den Füllvorgängen beider Dosierzylinder 17 und 18 überlagert ist. Zwischen der Beendigung jedes Füllvorgangs und dem Einsetzen des Ausstoßvorgangs aus dem betreffenden Dosierzylinder 17 bzw. 18 liegt dabei eine Ruhezeit, die jeweils durch den auf dem waagerechten Zeitstrahl liegenden Kurvenabschnitt angedeutet ist.

Die zeitweilige Überlappung der Ausstoßvorgänge beider Dosierzylinder 17 und 18 ist im Diagramm nach Fig. 3 durch die spitzwinkligen Dreiecke in den oberhalb des waagerechten Zeitstrahls liegenden Kurvenabschitten deutlich erkennbar. Es nimmt danach jeweils der Volumen-strom der aus dem zweiten Dosierzylinder, z.B. dem Dosierzylinder 18, ausgestoßenen Komponente A in gleichem Maße zu, wie der aus dem ersten Dosierzylinder, z.B. dem Dosierzylinder 17, austretende Volumenstrom der gleichen Komponente A abnimmt.

Selbstverständlich trifft das in Fig. 3 für die Dosierzylinder 17 und 18 der Komponente A gezeigte Volumenstrom-Diagramm in gleicher Weise auch auf die Dosierzylinder 19 und 20 für die Komponente B zu.

Die Steuerung der servobetätigten Proportionalventile 7a, 7b; 8a, 8b; 15a, 15b; 16a, 16b für die Hydraulikzylinder 5; 6; 13; 14 kann durch eine rechnergestützte Programmvorgabe erfolgen. Sie kann aber jeweils auch wegabhängig, bspw. in Abhängigkeit vom jeweils durchlaufenen Stellweg der Plunger-bzw. Tauchkolben 21 in den Dosierzylindern 17, 18 bzw. 19, 20 bewirkt werden. Wichtig ist aber in jedem Falle, daß der Füllvorgang für jeden der zusammenarbeitenden Dosierzylinder 17 und 18 bzw. 19 und 20 während eines Zeitraums stattfindet, der kürzer bemessen ist als der für den Ausstoßvorgang der Komponenten-Füllung aus diesen Dosierzylindern 17 und 18 bzw. 19 und 20 benötigte Zeitraum. Nur dann kann nämlich sichergestellt werden, daß sich die Ausstoßvorgänge beider zusammenarbeitender Dosierzylinder 17 und 18 bzw. 19 und 20 zeitweilig und in zweckentsprechender Art und-Weise überlappen.

**Patentansprüche**

1. Vorrichtung zum Dosieren von Reaktionsgemischen, insbesondere für die Erzeugung von Polyurethan-Hartschaum, bei welcher für die Zudosierung jeder Reaktionskomponente (A und B) Polyol und Isocyanat in einen Mischkopf zwei Dosierzylinder (17 und 18 bzw. 19 und 20) vorgesehen sind, wobei deren Dosierkolben (21) unabhängig voneinander durch je einen eigenen, doppelt wirkenden Hydraulikzylinder (5 und 6 bzw. 13 und 14) jeweils in gegenseitigem Wechsel für die Füllung mit der Reaktionskomponente (A oder B) und den anschließenden Ausstoß der eingefüllten Reaktionskomponente (A oder B) betreibbar sind,
dadurch gekennzeichnet, daß die die Dosierkolben (21) der zur Förderung der einen Reaktionskomponente (A) vorgesehenen beiden Dosierzylinder (17 und 18) betätigenden beiden Hydraulikzylinder (5 und 6) unabhängig voneinander durch eine erste gemeinsame Hydraulikpumpe (2) und die die Dosierkolben (21) der zur Förderung der anderen Reaktionskomponente (B) vorgesehenen beiden Dosierzylinder (19 und 20) betätigenden beiden Hydraulikzylindern (13 und 14) ebenfalls unabhängig voneinander durch eine zweite gemeinsame Hydraulikpumpe (10) antreibbar sind, daß in jeder von zwei Verbindungsleitungen (3a, 3b; 4a, 4b bzw. 11a, 11b; 12a, 12b) zwischen den Hydraulikzylindern (5; 6 bzw. 13; 14) und der jeweils zugehörigen Hydraulikpumpe (2 bzw. 10) ein servobetätigbares Proportionalventil (7a, 7b; 8a, 8b bzw. 15a, 15b; 16a, 16b) angeordnet ist,
daß dabei die Steuerzyklen der den Ausstoßvorgang beider zusammenarbeitender Dosierzylinder (17 und 18 bzw. 19 und 20) bestimmenden Proportionalventile (7b und 8b bzw. 15b und 16b) zueinander zeitweilig überlappt eingestellt sind,
daß ferner die Durchflußmenge der Hydraulikflüssigkeit zur Ausstoßseite (9a) der Kolben (9) der Hydraulikzylinder (5; 6 bzw. 13; 14) durch die beiden Proportionalventile (7b und 8b bzw. 15b und 16b) während der Überlappungszeit ihrer Steuerzyklen zueinander entgegengesetzt geregelt ist, und daß die beiden Proportionalventile (7b und 8b bzw. 15b und 16b) gemeinsam auf gleichbleibende Gesamt-Durchflußmenge geregelt sind.

2. Vorrichtung nach Anspruch 1, dadurch gekennzeichnet, daß die Steuerzyklen für die die Füllung der beiden Dosierzylinder (17 und 18 bzw. 29 und 20) bestimmenden Proportionalventile (7a und 8a bzw. 15a und 16a) zeitlich gegeneinander versetzt eingestellt sind und dabei die zeitweilige Überlappung der Steuerzyklen für den Ausstoßvorgang der beiden Dosierzylinder (17 und 18 bzw. 19 und 20) in diese Versetztzeit gelegt ist (Fig. 3).

3. Vorrichtung nach einem der Ansprüche 1 und 2, dadurch gekennzeichnet, daß die zeitweilige Überlappung der Steuerzyklen für den Ausstoßvorgang beider Dosierzylinder (17 und 18 bzw. 19 und 20) kürzer als die Versetztzeit zwischen den Füllvorgängen für diese Dosierzylinder (17 und 18 bzw. 19 und 20) eingestellt ist (Fig. 3).

4. Vorrichtung nach einem der Ansprüche 1 bis 3, dadurch gekennzeichnet, daß die zeitweilige Überlappung der Steuerzyklen für den Ausstoßvorgang beider Dosierzylinder (17, 18 bzw. 19, 20) etwa einem Drittel der Versetztzeit zwischen den Füllvorgängen für die beiden Dosierzylinder (17 und 18 bzw. 19 und 20) entspricht.

5. Vorrichtung nach einem der Ansprüche 1 bis 4, dadurch gekennzeichnet, daß die zeitweilige Überlappung der Steuerzyklen für den Ausstoßvorgang beider Dosierzylinder (17 und 18 bzw. 19 und 20) dem Endabschnitt der Versetztzeit zwischen den Füllvorgängen beider Dosierzylinder (17 und 18 bzw. 19 und 20) überlagert ist (Fig. 3).

**Revendications**

1. Dispositif pour le dosage de mélanges réactionnels, notamment pour la production de mousse rigide de polyuréthane, dans lequel deux cylindres de dosage (17 et 18 ou 19 et 20) sont prévus dans une tête mélangeuse pour l'addition dosée de chaque composante réactionnelle (A et B) polyol et isocyanate -, les deux pistons de dosage (21) étant actionnables indépendamment l'un de l'autre par chaque fois un cylindre hydraulique à double effet propre (5 et 6 ou 13 et 14), en alternances chaque fois opposées pour le remplissage de la composante réactionnelle (A ou B) et l'éjection subséquente de la composante réactionnelle introduite (A ou B).

caractérisé en ce que

les deux cylindres hydrauliques (5 et 6) actionnant les pistons de dosage (21) des deux cylindres de dosage (17 et 18) prévus pour l'alimentation de la première composante réactionnelle (A) sont actionnables indépendamment l'un de l'autre par une première pompe hydraulique commune (2) et les deux cylindres hydrauliques (13 et 14) actionnant les pistons de dosage (21) des deux cylindres de dosage (19 et 20) prévus pour l'alimentation de l'autre composante réactionnelle (3) sont également actionnables indépendamment l'un de l'autre par une deuxième pompe hydraulique commune (10)

en ce que, dans chacune des deux conduites de liaison (3a, 3b; 4a, 4b ou 11a, 11b; 12a, 12b) entre les cylindres hydrauliques (5; 6 ou 13; 14) et la pompe hydraulique correspondante (2 ou 10), est agencée une vanne proportionnelle servo commandée (7a, 7b; 8a, 8b ou 15a, 15b; 16a, 16b), en ce que les cycles de commande des vannes proportionnelles (7b et 8b ou 15b et 16b) déterminant l'opération d'éjection des deux cylindres de dosage (17 et 18 ou 19 et 20) fonctionnant en association sont réglés de manière à se chevaucher mutuellement temporairement, en ce que, en outre, le débit du liquide hydraulique du côté de l'éjection (9a) des pistors (9) des cylindres hydrauliques (5; 6 ou 13; 14) est réglé par les deux vannes proportionnelles (7b et 8b ou 15b et 16b) de manière opposée l'un à l'autre pendant la période de chevauchement de leurs cycles de commande, et

en ce que les deux vannes proportionnelles (7b et 8b ou 15b et 16b) sont réglées simultanément sur un débit global constant.

2. Dispositif selon la revendication 1 caractérisé en ce que les cycles de commande des vannes proportionnelles (7a et 8a ou 15a et 16a) déterminant le remplissage des deux cylindres de dosage (17 et 18 ou 19 et 20) sont réglés de manière décalée dans le temps l'un par rapport à l'autre et en ce que le chevauchement temporaire des cycles de commande pour l'éjection des deux cylindres de dosage (17 et 18 ou 19 et 20) est réglé dans ce décalage (figure 3).

3. Dispositif selon l'une quelconque des revendications 1 et 2 caractérisé en ce que le chevauchement temporaire des cycles de commande pour l'opération d'éjection des deux cylindres de dosage (17 et 18 ou 19 et 20) est réglé plus court que le décalage entre les opérations de remplissage pour ces cylindres de dosage (17 et 18 ou 19 et 20) (figure 3).

4. Dispositif selon l'une quelconque des revendications 1 à 3 caractérisé en ce que le cheva chement temporaire des cycles de commande pour l'éjection des deux cylindres de dosage (17, 18 ou 19, 20) correspond approximativement à un tiers du décalage entre les opérations de remplissage pour les deux cylindres de dosage (17 et 18 ou 19 et 20).

5. Dispositif selon l'une quelconque des revendications 1 à 4 caractérisé en ce que le chevauchement temporaire des cycles de commande pour l'éjection des deux cylindres de dosage (17 et 18 ou 19 et 20) est superposé au segment final du temps de décalage entre les opérations de remplissage des deux cylindres de dosage (17 et 18 ou 19 et 20) (figure 3).

**Claims**

1. Device for the metering of reaction mixtures, in particular for the production of hard polyurethane foam, in which device two metering cylinders (17 and 18 or 19 and 20) are provided for the admetering of each reaction component (A and B) — polyalcohol and isocyanate — in a mixing head, wherein their metering pistons (21) are each operable independently of the other, each time in mutual alternation for the filling with the reaction components (A or B) and the subsequent expulsion of the introduced reaction components (A or B), by a respective own double-acting hydraulic cylinder (5 and 6 or 13 and 14), characterised thereby, that both the hydraulic cylinders (5 and 6), which actuate the metering pistons (21) of both the metering cylinders (17 and 18) provided for the conveying of the one reaction component (A), are drivable each independently of the other by a first common hydraulic pump (2) and both the hydraulic cylinders (13 and 14), which actuate the metering piston (21) of both the metering cylinders (19 and 20) provided for the conveying of the other reaction component (B), are likewise drivable each independently of the other by a second common hydraulic pump (10), that a servo-actuated proportional valve (7a, 7b; 8a, 8b or 15a, 15b; 16a, 16b) is arranged in each of two connecting ducts (3a, 3b; 4a, 4b or 11a, 11b; 12a, 12b) between the hydraulic cylinders (5; 6 or 13; 14) of the respectively associated hydraulic pump (2 or 10), that the control cycles of the proportional valves (7b and 8b or 15b and 16b) determining the expulsion process of both co-operating metering cylinders (17 and 18 or 19 and 20) are in that case set each to be overlapping the other in time, that the throughflow quantity of the hydraulic fluid to the expulsion side (9a) of the pistons (9) of the hydraulic cylinders (5; 6 or 13; 14) is furthermore regulated by both the proportional valves (7b and 8b or 15b and 16b) to be mutually opposite during the overlapping time of their control cycles and that both the proportional valves (7b and 8b or 15b and 16b) are regulated in common to a total throughflow quantity which remains constant.

2. Device according to claim 1, characterised thereby, that the control cycles for the proportional valves (7a and 8b or 15a and 16a) determining the filling of both the metering cylinders (17 and 18 or 19 and 20) are set each to be displaced relative to the other in time and the time overlap of the control cycles for the expulsion process of both the metering cylinders (17 and 18 or 19 and 20) is in that case disposed into this displaced time (Fig. 3).

3. Device according to one of the claims 1 and 2, characterised thereby, that the time overlap of the control cycles for the expulsion process of both the metering cylinders (17 and 18 or 19 and 20) is set to be shorter than the displaced time between the filling processes for these metering cylinders (17 and 18 or 19 and 20) (Fig. 3).

4. Device according to one of the claims 1 to 3, characterised thereby, that the time overlap of the control cycles for the expulsion process of both the metering cylinders (17 and 18 or 19 and 20) corresponds to about one third of the displaced time between the filling processes for these metering cylinders (17 and 18 or 19 and 20).

5. Device according to one of the claims 1 to 4, characterised thereby, that the time overlap of the control cycles for the expulsion process of both the metering cylinders (17 and 18 or 19 and 20) is superposed on the end portion of the displaced time between the filling processes for these metering cylinders (17 and 18 or 19 and 20) (Fig. 3).

Fig.1

Fig.2

Fig. 3
Dosierzylinder 17
Dosierzylinder 18
Ausstoßen
Füllen